# EUROPÄISCHE PATENTSCHRIFT

(11) **EP 3 313 165 B1**
(45) Veröffentlichungstag und Bekanntmachung des Hinweises auf die Patenterteilung: **07.08.2019**
(21) Anmeldenummer: 16741227.9
(22) Anmeldetag: 24.06.2016
(51) Int. Cl.: A01C 17/00, F16D 41/00

(54) **ANTRIEBSSTRANG MIT ANGETRIEBENER WELLE, MAGNETOSTRIKTIVER DREHMOMENTMESSUNG UND INTEGRIERTEM FREILAUF**
DRIVE TRAIN COMPRISING A DRIVEN SHAFT, A MAGNETOSTRICTIVE TORQUE MEASUREMENT, AND AN INTEGRATED FREEHWEEL
CHAÎNE CINÉMATIQUE COMPRENANT UN ARBRE ENTRAÎNÉ, UNE MESURE DU COUPLE DE ROTATION PAR UNE TECHNOLOGIE MAGNÉTOSTRICTIVE ET ROUE LIBRE INTÉGRÉE

(30) Priorität: 24.06.2015 DE 102015211708
(43) Veröffentlichungstag der Anmeldung: 02.05.2018
(73) Patentinhaber: Schaeffler Technologies AG & Co. KG, 91074 Herzogenaurach (DE)
(72) Erfinder: GERNER, Armin, 96178 Pommersfelden (DE); WITTMANN, Bernd, 96178 Pommersfelden (DE)
(86) Internationale Anmeldenummer: PCT/DE2016/200289
(87) Internationale Veröffentlichungsnummer: WO 2016/206686

(56) Entgegenhaltungen:
- EP-A1- 2 625 945
- AT-B- 406 792
- DE-A1-102007 028 990
- DE-A1-102012 209 770
- GB-A- 1 598 908

## Beschreibung

Die vorliegende Erfindung betrifft einen Antriebsstrang eines Schleuderstreuers.

Der Antriebsstrang kann beispielsweise Bestandteil des Arbeitseinheiten-Antriebsstrangs von Fahrzeugen, insbesondere von mobilen Arbeitsmaschinen und landwirtschaftlichen Nutzfahrzeugen oder Anbaugeräten, wie Düngerstreuern, sein. Düngerstreuer sind beispielsweise aus der DE 10 2010 020 551 A1, EP 0 084 872 B1 und der DE 198 25 917 A1 bekannt. Die Anordnung kann aber auch in anderen Antriebssträngen genutzt werden, soweit dort eine Drehmomentenmessung gewünscht ist.

Magnetostriktive Drehmomentsensoren umfassen ein magnetostriktives Element, beispielsweise einen Ring, der an einer Welle befestigt ist oder einen Teil der Welle bildet. Der Ring ist magnetisch in Umfangsrichtung polarisiert. Bei still stehender Welle ist die Magnetisierung rings um den Umfang des Rings orientiert. Außerhalb des Ringes existiert kein magnetisches Feld. Wird nun ein Drehmoment an die Welle und den mit dieser verbundenen Ring angelegt, erzeugt der magnetostriktive Ring ein Magnetfeld außerhalb der Rings, welches sich mit dem angelegten Drehmoment ändert. Ein in Nähe des Rings angeordneter Magnetfeldsensor erfasst die Größe dieses Magnetfeldes und erzeugt ein entsprechendes Ausgangssignal.

Die DE 10 2010 040 966 A1 beschreibt eine Drehmomentsensoranordnung zur berührungslosen Erfassung eines Drehmoments einer Welle. Die Anordnung umfasst zunächst die Welle, welche in zumindest einer definierten Zone magnetostriktiv ausgebildet ist. Ein Magnetfeldsensor dient zur Erfassung des von der magnetostriktiven Zone modulierten Magnetfeldes. Die erfassten Sensorsignale werden mittels einer elektronischen Auswerteschaltung verarbeitet. Die Drehmomentsensoranordnung kann Teil einer elektrischen Lenkung sein, welche einen Elektromotor sowie eine mittels Elektromotor direkt oder über ein Getriebe angetriebene Lenkwelle beinhaltet.

Die DE 10 2007 046 749 A1 zeigt die Verwendung eines magnetostriktiven Sensors zur Drehzahlmessung bei einer mittels mindestens einer Antriebskurbel antreibbaren Einrichtung, wie beispielsweise eines Fahrrads, Ergometers oder Pedelecs. Der magnetostriktive Sensor ist mit einer Antriebswelle fest verbunden und axial zwischen Antriebskurbel und einem mit der Antriebswelle verbundenen Abtriebselement angeordnet.

Die EP 2 625 945 A1 zeigt einen Antriebsstrang mit den Merkmalen des Oberbegriffes des Anspruchs 1. Bislang werden durch magnetostriktive Drehmomentsensoren zumeist nur in eine Richtung wirkende Drehmomente erfasst. Sobald Lasten in beide Drehrichtungen eingebracht werden, vergrößert sich nämlich in der Regel die Hysterese des Sensors erheblich. Dies hat negative Auswirkungen auf die Sensorgenauigkeit. Außerdem kommt es zu einer Verschiebung des Offsets, wodurch die Qualität der Messwerte abnimmt.

Bei mechanisch angetriebenen drehmomentgesteuerten Düngerstreuern oder ähnlichen Antriebsanordnungen kann es beispielsweise nach Abschaltung des vom Hauptaggregat getriebenen Zapfwellenantriebs aufgrund des Systemaufbaus zu hohen negativen Drehmomenten kommen. Diese können durch die im Traktor verbauten Zapfwellenbremsen noch deutlich ansteigen, was sich, wie beschrieben, negativ auf die Genauigkeit einer integrierten Drehmomentmessung auswirken würde.

Die Aufgabe der vorliegenden Erfindung besteht darin, eine Anordnung mit einer in einer Antriebsrichtung angetriebenen Welle und einem Drehmomentmodul zur magnetostriktiven Erfassung des Drehmoments der Welle zur Verfügung zu stellen, bei welcher auch bei Auftreten von entgegen der Antriebsrichtung wirkenden Drehmomenten eine genaue Drehmomentmessung ermöglicht wird. Diese Anordnung soll als ein Antriebsstrang für einen Schleuderstreuer mit einer integrierten magnetostriktiven Drehmomentmessung zur Verfügung gestellt werden.

Zur Lösung der erfindungsgemäßen Aufgabe dient ein Antriebsstrang gemäß Anspruch 1.

Die erfindungsgemäße Anordnung zeichnet sich dadurch aus, dass zwischen Antrieb und Drehmomentmodul ein Freilauf zur Übertragung von Drehmomenten in Antriebsrichtung und zum Verhindern der Übertragung von Drehmomenten entgegen der Antriebsrichtung angeordnet ist. Durch die Integration eines Freilaufs wird die Übertragung von entgegen der Antriebsrichtung wirkenden Drehmomenten sicher verhindert. Das Drehmomentmodul wird somit vor den negativen Auswirkungen entgegen der Antriebsrichtung wirkender Drehmomente geschützt. In Folge dessen verkleinert sich die Hysterese und eine Offsetverschiebung wird vermieden. Hierdurch verbessert sich die Sensorgenauigkeit nachhaltig.

Gemäß einer ersten vorteilhaften Ausführungsform ist der Freilauf als mechanischer Freilauf ausgebildet. Der mechanische Freilauf kann beispielsweise als Klemmfreilauf (Klemmrollen- oder Klemmkörperfreilauf), Reibfreilauf, Zahnfreilauf und Klinkenfreilauf ausgeführt sein.

Alternativ kann der Freilauf auch in Form eines elektrisch betätigen Freilaufs vorliegen.

Das Drehmomentmodul umfasst vorzugsweise einen magnetostriktiven Drehmomentgeber und einen Magnetfeldsensor. Der magnetostriktive Drehmomentgeber ist entweder an der Welle befestigt oder alternativ als magnetostriktiver Bereich der Welle ausgeführt.

Der erfindungsgemäße Antriebsstrang ist bevorzugt Bestandteil des Antriebsstrangs eines Fahrzeugs. Das Fahrzeug ist vorzugsweise ein landwirtschaftliches Nutzfahrzeug, insbesondere ein drehmomentgesteuerter Schleuderstreuer für Düngemittel u. ä.

Der Antriebsstrang eines Schleuderstreuers umfasst mindestens eine auf einer Welle drehfest befestigte Streuscheibe, einen Antrieb zum rotativen Antreiben der Welle in einer Antriebsrichtung sowie ein Drehmomentmodul zur magnetostriktiven Erfassung des Drehmoments der Welle. Zwischen Antrieb und Drehmomentmodul ist ein Freilauf zur Übertragung von Drehmomenten in Antriebsrichtung und zum Verhindern der Übertragung von Drehmomenten entgegen der Antriebsrichtung angeordnet.

Der Antriebsstrang ist nach einer vorteilhaften Ausführung mit zwei Streuscheiben ausgestattet. Die Streuscheiben sind jeweils auf einer Welle drehfest befestigt. Die Wellen sind über jeweils ein Getriebe mit jeweils einer Verbindungswelle gekoppelt. Die Verbindungswellen sind über ein Verteilergetriebe mit einer Antriebswelle des Antriebs verbunden. Zur magnetostriktiven Erfassung des Drehmoments der beiden Wellen dienen zwei Drehmomentmodule, die jeweils an der Welle, an der die Streuscheibe angebracht ist, angeordnet sind. Als besonders zweckmäßig hat es sich erwiesen, den Freilauf zwischen dem Antrieb und dem Verteilergetriebe anzuordnen. Eine derartige Anordnung des Freilaufs hat den Vorteil, dass nur ein Freilauf für die gesamte Anordnung benötigt wird.

Es ist natürlich ebenso möglich, den Freilauf an einer beliebigen Position zwischen Verteilergetriebe und Drehmomentmodul anzuordnen. In diesem Fall würde jedoch für jedes Drehmomentmodul ein separater Freilauf benötigt werden. Die zuvor beschriebene Ausführung betrifft einen mechanisch angetriebenen Schleuderstreuer, bei welchem der Antrieb der Streuscheiben über einen Zapfwellenantrieb erfolgt. Alternativ können die Streuscheiben auch über jeweils einen Hydraulikmotor oder einen Elektromotor angetrieben werden. Ebenso kann eine Abwandlung darin bestehen, dass im Antriebsstrang an einer Stelle zwischen Antrieb und Drehmomentmodul jeweils ein Freilauf angeordnet werden. Der Freilauf kann auch vor oder nach einem zwischengeschalteten Getriebe angeordnet werden.

Eine bevorzugte Ausführungsform der Erfindung sowie deren Vorteile und Einzelheiten werden nachfolgend anhand der einzigen beigefügten Figur näher erläutert.

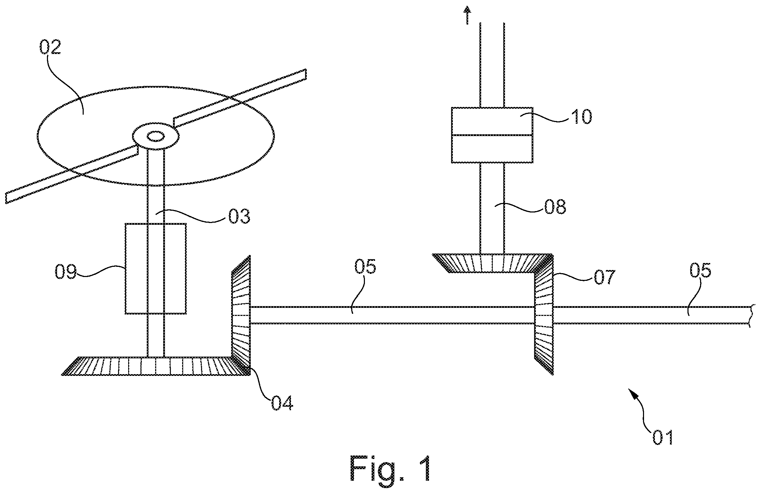

Die Figur zeigt eine vereinfachte Teilansicht eines erfindungsgemäßen Antriebsstrangs 01 eines Schleuderstreuers. Der Schleuderstreuer dient üblicherweise zum Ausbringen von Düngemitteln u. ä.

Der Antriebsstrang 01 umfasst zwei Streuscheiben 02, welche auf jeweils einer Welle 03 drehfest befestigt sind. In der Figur sind lediglich eine Streuscheibe 02 und deren Einbindung in den Antriebsstrang 01 dargestellt. Jede Welle 03 ist über jeweils ein Getriebe 04 an jeweils eine Verbindungswelle 05 gekoppelt. Die beiden Verbindungswellen 05 sind über ein Verteilergetriebe 07 mit einer Antriebswelle 08 eines Antriebs (nicht dargestellt) verbunden. Der Antrieb wird beispielsweise durch ein Hauptaggregat eines landwirtschaftlichen Fahrzeugs gebildet. Die Antriebswelle 08 ist vorzugsweise eine Zapfwelle eines Zapfwellenantriebs eines Traktors.

Das Drehmoment der Welle 03 wird über jeweils ein zugeordnetes Drehmomentmodul 09 magnetostriktiv erfasst. Das Drehmomentmodul 09 beinhaltet einen magnetostriktiven Drehmomentgeber und einen Magnetfeldsensor. Der magnetostriktive Drehmomentgeber kann an der Welle 03 befestigt sein oder als magnetostriktiver Bereich der Welle 03 ausgebildet sein. Zur Realisierung des magnetostriktiven Bereichs der Welle 03 besteht die Welle 03 in einem definierten Bereich vorzugsweise aus ferromagnetischem Material. Alternativ kann auch die gesamte Welle 03 aus einem ferromagnetischen Material gefertigt sein. Die vom Magnetfeldsensor erfassten Daten werden von einer entsprechenden Auswerteeinheit verarbeitet. Die Auswerteeinheit kann Bestandteil des Drehmomentmoduls 09 sein oder als externe Einheit ausgeführt sein.

In Antriebsrichtung zwischen Antrieb und Drehmomentmoduls 09 ist ein Freilauf 10 eingebunden. Im dargestellten Beispiel ist der Freilauf 10 zwischen Antrieb und dem Verteilergetriebe 07 angeordnet. Der Freilauf 10 ist dafür ausgelegt, Drehmomente in einer definierten Antriebsrichtung zu übertragen und entgegen der Antriebsrichtung wirkende Drehmomente zu verhindern bzw. zu blockieren. Der Freilauf 10 kann als mechanischer Freilauf ausgebildet sein. Alternativ kann der Freilauf 10 auch elektrisch oder hydraulisch betätigbar sein. Durch die Verwendung des Freilaufs 10 ist sichergestellt, dass das Drehmomentmodul 09 lediglich mit in einer Drehrichtung wirkenden Drehmomenten beaufschlagt wird. Drehmomente entgegen der Antriebsrichtung werden hingegen vom Drehmomentmodul 09 fern gehalten. Auf diese Weise wird eine äußerst präzise Drehmomentmessung ermöglicht.

Die beschriebene Ausführungsform trägt lediglich beispielhaften Charakter. Es soll keine Einschränkungen auf Antriebsstränge von Schleuderstreuern erfolgen. Die erfindungsgemäße Lösung kann ebenso bei anderen Anwendungen zum Einsatz kommen, welche magnetostriktive Drehmomentmodule verwenden, eine Übertragung von Drehmomenten in lediglich einer Richtung benötigen und kein aktives Abbremsen erfordern.

### Bezugszeichenliste

- 01: Antriebsstrang
- 02: Streuscheiben
- 03: Wellen
- 04: Getriebe
- 05: Verbindungswelle
- 06: -
- 07: Verteilergetriebe
- 08: Antriebswelle
- 09: Drehmomentmodul
- 10: Freilauf

## Patentansprüche

1. Antriebsstrang (01) eines Schleuderstreuers umfassend mindestens eine auf einer Welle (03) drehfest befestigte Streuscheibe, einen Antrieb zum rotativen Antreiben der Welle (03) in einer Antriebsrichtung, ein Drehmomentmodul (09) zur magnetostriktiven Erfassung des Drehmoments der Welle (03), **dadurch gekennzeichnet, dass** zwischen Antrieb und Drehmomentmodul (09) mindestens ein Freilauf (10) zur Übertragung von Drehmomenten in Antriebsrichtung und zum Verhindern der Übertragung von Drehmomenten entgegen der Antriebsrichtung angeordnet ist.

2. Antriebsstrang nach Anspruch 1, **dadurch gekennzeichnet, dass** der Freilauf (10) ein mechanischer Freilauf ist.

3. Antriebsstrang nach Anspruch 1, **dadurch gekennzeichnet, dass** der Freilauf (10) elektrisch oder hydraulisch betätigbar ist.

4. Antriebsstrang nach einem der Ansprüche 1 bis 3, **dadurch gekennzeichnet, dass** das Drehmomentmodul (09) einen magnetostriktiven Drehmomentgeber und einen Magnetfeldsensor umfasst, wobei der magnetostriktive Drehmomentgeber an der Welle (03) befestigt ist oder als magnetostriktiver Bereich der Welle (03) ausgeführt ist.

5. Antriebsstrang nach einem der Ansprüche 1 bis 4, **dadurch gekennzeichnet, dass** sie Bestandteil eines Arbeitsmittel-Antriebsstrangs (01) eines Fahrzeugs ist.

6. Antriebsstrang nach Anspruch 5, **dadurch gekennzeichnet, dass** das Fahrzeug ein landwirtschaftliches Nutzfahrzeug, und dass das Arbeitsmittel ein drehmomentgesteuerter Schleuderstreuer ist.

7. Anthebsstrang (01) nach Anspruch 1, **dadurch gekennzeichnet, dass** er zwei oder mehr Streuscheiben (02) umfasst, welche auf jeweils einer Welle (03) drehfest befestigt sind, dass die Wellen (03) über jeweils ein Getriebe (04) mit jeweils einer Verbindungswelle (05) gekoppelt sind, wobei die Verbindungswellen (05) über ein Verteilergetriebe (07) mit einer Antriebswelle (08) des Antriebs verbunden sind; und dass er zwei oder mehr Drehmomentmodule (09) zur magnetostriktiven Erfassung des Drehmoments der zwei oder mehr Wellen (03) aufweist.

8. Antriebsstrang (01) nach Anspruch 7, **dadurch gekennzeichnet, dass** genau ein Freilauf (10) zwischen dem Antrieb und dem Verteilergetriebe (07) angeordnet ist.

9. Antriebsstrang (01) nach Anspruch 7, **dadurch gekennzeichnet, dass** er zwei oder mehr Freiläufe (10) aufweist, wobei die Freiläufe (10) jeweils zwischen Verteilergetriebe (07) und Drehmomentmodul (09) angeordnet sind.

## Claims

1. Drive train (01) of a centrifugal spreader comprising at least one spreader disc which is fastened fixedly on a shaft (03) so as to rotate with it, a drive for rotationally driving the shaft (03) in a drive direction, a torque module (09) for the magnetostrictive detection of the torque of the shaft (03), **characterized in that** at least one freewheel (10) for the transmission of torques in the drive direction and for the prevention of the transmission of torques counter to the drive direction is arranged between the drive and the torque module (09).

2. Drive train according to Claim 1, **characterized in that** the freewheel (10) is a mechanical freewheel.

3. Drive train according to Claim 1, **characterized in that** the freewheel (10) can be actuated electrically or hydraulically.

4. Drive train according to one of Claims 1 to 3, **characterized in that** the torque module (09) comprises a magnetostrictive torque transmitter and a magnetic field sensor, the magnetostrictive torque transmitter being fastened to the shaft (03) or being configured as a magnetostrictive region of the shaft (03).

5. Drive train according to one of Claims 1 to 4, **characterized in that** it is a constituent part of a working appliance drive train (01) of a vehicle.

6. Drive train according to Claim 5, **characterized in that** the vehicle is an agricultural utility vehicle, and **in that** the working appliance is a torque-controlled centrifugal spreader.

7. Drive train (01) according to Claim 1, **characterized in that** it comprises two or more spreader discs (02) which are fastened fixedly on in each case one shaft (03) so as to rotate with it, **in that** the shafts (03) are coupled via in each case one transmission (04) to in each case one connecting shaft (05), the connecting shafts (05) being connected via a transfer case (07) to a drive shaft (08) of the drive, and **in that** it has two or more torque modules (09) for the magnetostrictive detection of the torque of the two or more shafts (03).

8. Drive train (01) according to Claim 7, **characterized in that** precisely one freewheel (10) is arranged between the drive and the transfer case (07).

9. Drive train (01) according to Claim 7, **characterized in that** it has two or more freewheels (10), the freewheels (10) being arranged in each case between the transfer case (07) and the torque module (09).

## Revendications

1. Chaîne cinématique (01) d'un épandeur centrifuge, comprenant au moins un disque d'épandage fixé de manière solidaire en rotation sur un arbre (03), un entraînement pour l'entraînement en rotation de l'arbre (03) dans une direction d'entraînement, un module de couple (09) pour la détection magnétostrictive du couple de l'arbre (03), **caractérisée en ce qu'**entre l'entraînement et le module de couple (09) est disposée au moins une roue libre (10) pour le transfert de couples dans la direction d'entraînement et pour empêcher le transfert de couples dans le sens opposé à la direction d'entraînement.

2. Chaîne cinématique selon la revendication 1, **caractérisée en ce que** la roue libre (10) est une roue libre mécanique.

3. Chaîne cinématique selon la revendication 1, **caractérisée en ce que** la roue libre (10) peut être commandée électriquement ou hydrauliquement.

4. Chaîne cinématique selon l'une quelconque des revendications 1 à 3, **caractérisée en ce que** le module de couple (09) comprend un transmetteur de couple magnétostrictif et un capteur de champ magnétique, le transmetteur de couple magnétostrictif étant fixé à l'arbre (03) ou étant réalisé sous forme de région magnétostrictive de l'arbre (03).

5. Chaîne cinématique selon l'une quelconque des revendications 1 à 4, **caractérisée en ce qu'**elle fait partie d'une chaîne cinématique d'équipement de travail (01) d'un véhicule.

6. Chaîne cinématique selon la revendication 5, **caractérisée en ce que** le véhicule est un véhicule utilitaire agricole et **en ce que** l'équipement de travail est un épandeur centrifuge commandé en fonction du couple.

7. Chaîne cinématique (01) selon la revendication 1, **caractérisée en ce qu'**elle comprend deux ou plus de deux disques d'épandage (02) qui sont fixés de manière solidaire en rotation sur un arbre respectif (03), **en ce que** les arbres (03) sont accouplés par le biais d'une transmission respective (04) à chaque fois à un arbre de liaison (05), les arbres de liaison (05) étant connectés par le biais d'une boîte de transfert (07) à un arbre d'entraînement (08) de l'entraînement ; et **en ce qu'**elle présente deux ou plus de deux modules de couple (09) pour la détection magnétostrictive du couple des deux ou plus de deux arbres (03).

8. Chaîne cinématique (01) selon la revendication 7, **caractérisée en ce qu'**exactement une roue libre (10) est disposée entre l'entraînement et la boîte de transfert (07).

9. Chaîne cinématique (01) selon la revendication 7, **caractérisée en ce qu'**elle présente deux ou plus de deux roues libres (10), les roues libres (10) étant disposées à chaque fois entre la boîte de transfert (07) et le module de couple (09).
